# EUROPEAN PATENT APPLICATION

(11) **EP 1 217 416 A1**
(43) Date of publication of application: **26.06.2002**
(21) Application number: 00610138.0
(22) Date of filing: 21.12.2000
(51) Int. Cl.: G02C 1/06

(54) **A pair of spectacles and an upper front portion for use therein**

(71) Applicant: F.A. Thiele A/S, 2650 Hvidovre (DK)
(72) Inventor: Thiele, Jens Frederik Anton, 2920 Charlottenlund (DK)
(74) Representative: Raffnsöe, Knud Rosenstand

(57) **Abstract**

A pair of spectacles comprises a pair of lenses (1, 2) engaged along an edge part by at least one frame member (4, 5) of a wire material engaging an edge part of each of the lenses (1, 2) and a pair of temple members (9, 10) connected with said frame member by a hinge assembly (11, 12) and at least one upper front portion (13, 14) engageable with the upper edge part of each lens (1, 2).

The upper front portion (13, 14) is formed as a strip-like member of a thickness matching the diameter of the wire material and has one side edge engageable with a second frame member (3) of wire material, which is detachably connected with said at least one frame member (4, 5) to retain the upper front portion (13, 14) in firm engagement with the upper lens edge part as well as the second frame member (3) while enabling replacement of the upper front portion (13, 14).

## Description

The present invention relates to a pair of spectacles comprising a pair of lenses, at least one frame member of a wire material engaging an edge part of each of the lenses, a pair of temple members connected with said frame member by a hinge assembly and at least one upper front portion engageable with the upper edge part of each lens and being connected with said at least one frame member, apertures for receiving and restraining the lenses being defined by said upper front portion and said frame member.

Moreover, the invention relates to an upper front portion for use with such a pair of spectacles.

Spectacles of the kind having frame and temple members made of small diameter light weight metallic wire material such as titanum are known e.g. from EP-B1-0 256 098, EP-B1-0 546 589, US-A-5,518,566, WO 92/08158 and WO 97/23803 and have gained increasing popularity due to their high strength and very low weight and the comfort in use resulting therefrom.

From a design point such spectacle frames are attractive by offering the possibility of a very discrete framing of eye glass lenses covering a minimum of the users' face, but when made of titanium wire also the possibility of an appealing design due to the ability of titanium wire material to be coloured by an electrical process to meet users individual tastes.

Together with the possibility of making such spectacle frames in a rimless design, where small wire pieces connected with the temple members are fixed in slits or holes formed directly in the lenses, as well as in full-rimmed and half-rimmed versions these design options provide for a relatively wide range of frame designs to meet individual needs and tastes of users.

In order to meet individual user demands for a more distinct front appearance of such wire-framed spectacles than offered by the use of the rather thin wire material only for the frame members it is suggested in the above-mentioned publication WO 97/23803 to use as an upper frame member for the lenses a front component, which is cut from a thin metal plate and includes the nose bridge as well as connecting parts for connection with the two temples via respective hinges. The front component is retained in engagement with the upper edges of the lenses by connection with a lower lens framing member of wire material.

The use of this prior art front component as part of the framing of the lenses complicates the design of the lower wire-material frame member, with which it is to be connected and make dismounting of the frame e.g. for replacement of lenses a rather cumbersome operation. Moreover, the connection of the front component with the lower frame member implies provision of complicated structural connecting parts in the front component itself, which add to the costs of the component.

On this background, it is the object of the invention to provide a pair of spectacles of the kind defined of a simpler and less expensive design also offering the advantage of relatively easy dismounting of lens framing for replacement of lenses or of the upper front portion itself.

According to the invention, a pair of spectacles of the kind defined is characterized in that said upper front portion is formed as a strip-like member of a thickness matching the diameter of the wire material and having one side edge engageable with a second frame member of wire material, which is detachably connected with said at least one frame member to retain the upper front portion in firm engagement with said upper lens edge part as well as said second frame member while enabling replacement of the upper front portion.

The full-rimmed design of the pair of spectacles according to the invention with upper and lower frame members of wire material and with the upper front portion arranged in an intermediate position between and in engagement with the upper edges of the lenses as well as the upper frame member implies in particular that the same basic spectacle design can be used with or without the upper front portion, while using the same upper frame member in both situations.

In result upper front portions in various designs. e.g. various materials or various colours can be supplied as accessories, which need not be purchased together with the spectacles.

The detachable connection of frame members made from wire material offers the advantage of easy dismounting of the lens framing, while still maintaining stable and reliable retainment of the lenses between the wire frame members when connected with each other.

In a preferred embodiment of the pair of spectacles separate upper front portions are provided for each of the lenses, said second frame portion engaging both of said upper front portions and forming a nose bridge portion therebetween, said at least one frame member comprising separate frame members engaging lower peripheral edges of each of the lenses and being connected with said second frame member at said nose bridge portion.

Thereby, replacement of lenses and/or upper front portions may be effected by separate operations for each lens without further dismantling of the spectacle frame.

Further preferred and advantageous embodiments of the pair of spectacles are stated in dependent claims 3 to 7.

In view of the above-mentioned possibility of separate supply of upper front portions as accessories to wire-framed spectacles the invention further relates to an upper front portion for use with a pair of spectacles comprising a pair of lenses and interconnected first and second frame members of wire material providing a full-rimmed enclosure of each of the lenses.

According to the invention such an upper front portion is characterized in that it is formed as a strip-like member of a thickness matching the diameter of the wire material and is provided at opposed longitudinal edges with engagement means for engagement with an upper edge part of at least one lens as well as one of said frame members for arrangement of the upper front portion in a position intermediate a lens and said one frame member.

Preferred and advantageous embodiments of this upper front portion are stated in dependent claims 9 to 13.

In the following the invention will be described in more detail by way of a preferred although nonlimiting embodiment as shown in the accompanying drawings, in which
figs. 1, 2 and 3 are a top plan view, a front plan view and a side plan view, respectively, of a pair of spectacles embodying the invention,
fig. 4 is an enlarged section of fig. 3,
fig. 5 is a section of fig. 2 illustrating a number of design variations of upper front portions for use in the spectacles in figs. 1 to 3, and
fig. 6 and 7 are cross-sectional views along the lines A-A in fig. 2 to illustrate different designs of engagement means of a lens, an upper frame member and an upper front portion interposed therebetween.

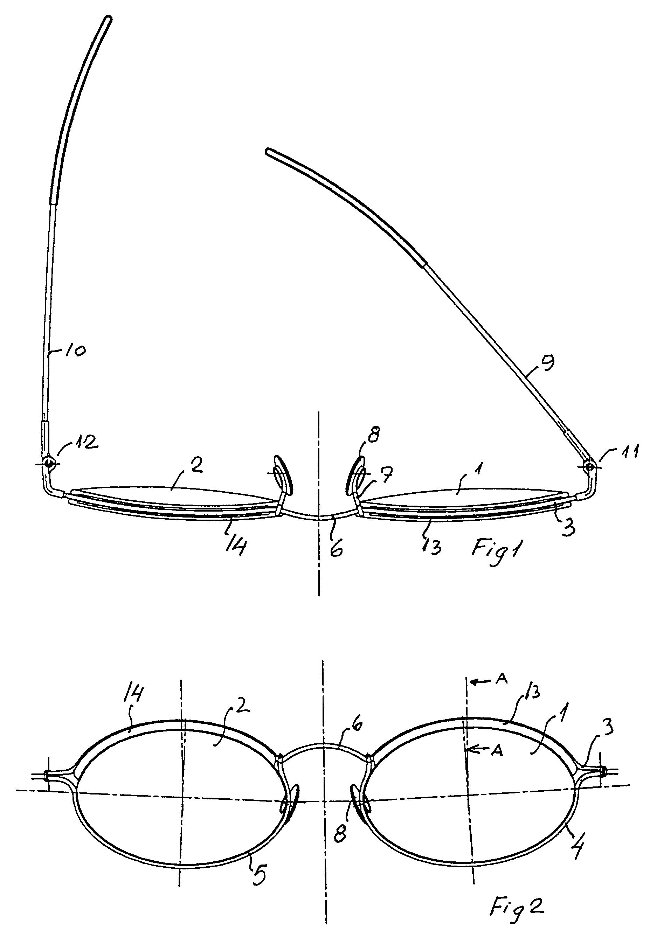

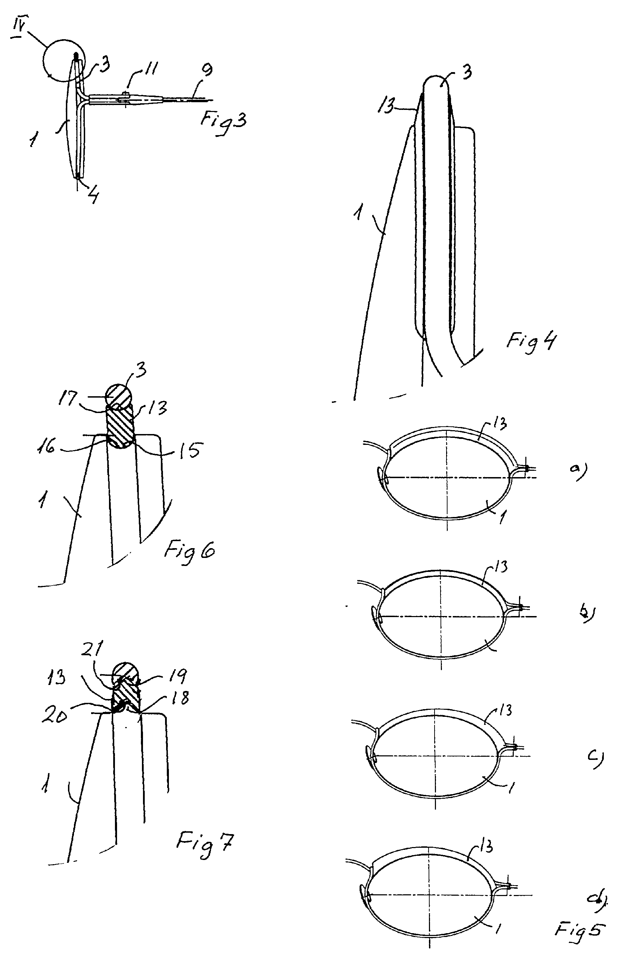

In the full-rimmed spectacle design illustrated by way of embodiment in figs. 1 to 3 each of a pair of eye glass lenses 1 and 2 is engaged along its upper and lower peripheral edges by an upper lens engaging frame member 3 and a lower second lens engaging frame member 4 or 5, respectively, which are made from stiff, high strength and light-weight wire material, preferably titanium or a titanium alloy.

Between lenses 1 and 2 the upper frame member 3 , which is common to the two lenses, is bent into a curved shape to provide a nose bridge 6. Each of the lower frame members 4 and 5, which are formed by separate wire pieces for each of lenses 1 and 2 engages not only the lower peripheral edge of the respective lens 1 or 2, but also the inner side peripheral edge thereof up to the nose bridge 6, at which a free end of each lower frame member 4,5 is bent around the upper frame member 3 to provide locking of frame members 4 and 5 with frame member 3 for a stable full-rimmed framing of lenses 1 and 2. This mutual locking of the frame members 3 to 5 is made relatively easily detachable, however by use of an appropriate tool to allow for dismounting of the framing of lenses 1 and 2, e.g. when replacement of one or both of lenses 1 and 2 is necessary or desirable.

In the illustrated embodiment the free ends of the lower frame members 4 and 5 bent around the upper frame member 3 at either end of the nose bridge 6 forms in addition a nose pad holder 7 for a resilient nose pad 8.

Outside the outer peripheral side edge of each of lenses 1 and 2 free end pieces of the upper frame member 3 and the lower frame members 4 and 5, respectively, are pivotally connected with temple members 9 and 10, respectively, which are formed from the same wire material as the frame members 3 to 5 by means of hinge assemblies generally designated by 11 and 12, respectively,

The design and structural details of the illustrated hinge assemblies 11 and 12 are disclosed in applicants copending European Patent Application entitled "A spectacle frame and a hinge assembly for use therein", the disclosure of which is incorporated herein by reference.

In the illustrated embodiment an upper front portion 13 and 14, respectively, is interposed between the upper peripheral edge of each of lenses 1 and 2 and the common upper frame member 3.

The upper front portions, which from a design perspective add a distinct "eye-brow" simulating appearance to the wire-framed spectacle design are formed as relatively thin strip-like members of a thickness matching the diameter of the wire material used for the upper and lower frame members. With the preferred use of titanium or a titanium alloy for the wire material the upper front portions may preferably be made from titanium or a titanium alloy of substantially the same composition as used for the wire material, and they may typically be made either stamping from sheet material or as cast members of a thickness matching the diameter of the wire material.

Alternatively, upper front portions may be made from materials, including non-metallic like various plastic materials, different from the wire material for the frame members. As illustrated by the few examples shown at a) to d) in fig. 5 a multitude of various design options are available to meet highly individualized user demands.

For the engagement with the upper peripheral edge of lens 1, 2 as well as the wire material of the upper front member 3, there may be formed as illustrated in fig. 6, a groove 15 in the peripheral edge of the lens 1, 2 having a cross-sectional profile adapted for accomodation of the wire material of the frame members 3 to 5, the diameter of which is typically about 1 mm, and for engagement with such a groove a lower longitudinal edge 16 of the upper front portion 13, 14 may be formed with a convex cross-sectional profile matching the groove. i.e. with substantially the same radius of curvature as the wire material. In the upper longitudinal edge 17 of the upper front portion 13, 14 a groove 17 may be formed with substantially the same cross-sectional profile as the peripheral edge groove 15 in the lens.

As an alternative solution for the engagement of the upper front portions 13 and 14 with the lenses 1 and 2 and the wire material of the upper frame member 3 the peripheral edge of the lens 1, 2 and the upper longitudinal edge of the front portions 13, 14 may as shown in fig. 7 be formed with a wedge-like cross-sectional profile 18, 19 matching a groove 20, 21 recessed in the lower longitudinal edge of the upper front portion 14, 15 and the wire material of the upper front member 3, respectively.

Whether one or the other solution is chosen for retainment of the upper front portions 13, 14 in their interposed position between each of lenses 1 and 2 and the upper frame member 3, it will be appreciated that preferably the cross-sectional edge profile of the lens 1, 2 would be the same throughout the peripheral edge of the lens including the lower and inner side edges engaged by the lower frame member 4 or 5.

With full-rimmed design as shown in the illustrated embodiment it will more be appreciated that the same common upper frame member may be arranged in direct engagement with the lenses 1 and 2, such the same pair of spectacles may be used with or without interposed upper front portions.

In result the upper front portions may be supplied as separate accessories to a pair of spectacles either simultaneously wit the purchase thereof or at any later point in time.

Although in the disclosed embodiment separate upper front portions are used for the two lenses 1 and 2 a single upper front portion common to the two lenses of a pair of spectacles and with an edge contour, including a nose bridge part, closely following the curvature and bending of the common upper frame member 3 may alternatively be contemplated.

## Claims

1. A pair of spectacles comprising a pair of lenses (1, 2), at least one frame member (4, 5) of a wire material engaging an edge part of each of the lenses (1, 2), a pair of temple members (9, 10) connected with said frame member by a hinge assembly (11, 12) and at least one upper front portion (13, 14) engageable with the upper edge part of each lens (1, 2) and being connected with said at least one frame member (4, 5), apertures for receiving and restraining the lenses being defined by said upper front portion (13, 14) and said frame member (4, 5), **characte rized in that** said upper front portion (13, 14) is formed as a strip-like member of a thickness matching the diameter of the wire material and having one side edge engageable with a second frame member (3) of wire material, which is detachably connected with said at least one frame member (4, 5) to retain the upper front portion (13, 14) in firm engagement with said upper lens edge part as well as said second frame member (3) while enabling replacement of the upper front portion (13, 14).

2. A pair of spectacles as claimed in claim 1, **characterized in that** separate upper front portions (13, 14) are provided for each of the lenses (1, 2), said second frame portion (3) engaging both of said upper front portions (13, 14) and forming a nose bridge portion (6) therebetween, said at least one frame member comprising separate frame members (4, 5) engaging lower peripheral edges of each of the lenses (1, 2) and being connected with said second frame member (3) at said nose bridge portion (6).

3. A pair of spectacles as claimed in claim 1 or 2, wherein said wire material is titanium or a titanium alloy, **characterized in that** the upper front portion or portions (13, 14) are made from titanium or a titanium alloy of substantially the same composition as the wire material

4. A pair of spectacles as claimed in claim 3, **characterized in that** the upper front portion or portions (13, 14) are made by stamping from sheet material of a thickness matching the diameter of the wire material.

5. A pair of spectacles as claimed in claim 3, **characterized in that** the upper front portion or portions (13, 14) are made as a cast member with a thickness matching the diameter of the wire material.

6. A pair of spectacles as claimed in any of the preceding claims, **characterized in that** at least edge parts of each lens (1, 2) engageable with said at least one frame member (4, 5) and said upper front portion (13, 14) are formed with a groove (15) for formfit engagement with the wire material of said frame members (3 to 5) and a side edge of said upper front portion (13, 14), respectively, said side edge (16) being formed with a convex cross-sectional profile matching the cross-sectional profile of said groove (15), an opposite side edge of said upper front portion (13, 14) being formed with a groove (17) for receiving said second frame member (3).

7. A pair of spectacles as claimed in any of claims 1 to 5, **characterized in that** at least edge parts of each lens (1, 2) engageable with said at least one frame member (4, 5) and said upper front portion (13, 14) is formed with a wedge-like cross-sectional profile (18) matching grooves (20) recessed in the wire material of said at least one frame member (4, 5) and a side edge of said upper front portion (13, 14), an opposite side edge (19) of said upper front portion (13, 14) being formed with a wedge-like cross-sectional profile matching a groove (21) recessed in the wire material of said second frame member (3).

8. An upper front portion for use with a pair of spectacles comprising a pair of lenses (1, 2) and interconnected first and second frame members (3 to 5) of wire material providing a full-rimmed enclosure of each of the lenses. **characterized in that** it is formed as a strip-like member of a thickness matching the diameter of the wire material and is provided at opposed longitudinal edges with engagement means for engagement with an upper edge part of at least one lens (1, 2) as well as one of said frame members (3 to 5) for arrangement of the upper front portion (13, 14) in a position intermediate a lens (1, 2) and said one frame member (3).

9. An upper front portion as claimed in claim 8 for use with a pair of spectacles, wherein said wire material is titanium or a titanium alloy, **characterized in that** it is made from titanium or a titanium alloy of substantially the same composition as the wire material

10. An upper front portion as claimed in claim 9, **characterized in that** it is made by stamping from sheet material of a thickness matching the diameter of the wire material.

11. An upper front portion as claimed in claim 9, **characterized in that** it is made as a cast member with a thickness matching the diameter of the wire material.

12. An upper front portion as claimed in any of claims 8 to 11 for use with a pair of spectacles, wherein at least edge parts of each lens engageable with said frame members are formed with a groove (15) for formfit engagement with the wire material of said frame members, **characterized in that** one of said opposed longitudinal edges (16) of the upper front portion (13, 14) is formed with a convex cross-sectional profile matching the cross-sectional profile of said groove, whereas the opposite longitudinal edge of said upper front portion (13, 14) being formed with a groove (17) for receiving said one frame member (3).

13. An upper front portion as claimed in any of claims 8 to 11 for use with a pair of spectacles, wherein at least edge parts of each lens (1, 2) engageable with said frame members (3 to 5) are formed with a wedge-like cross-sectional profile (18) matching grooves (21) recesed in the wire material of said frame members **characterized in that** a recessed groove (20) is formed in one of said opposed longitudinal edges of the upper front portion (13, 14) to receive said wedge-like cross-sectional profile (18) of an edge part of a lens (1, 2), whereas the opposite longitudinal edge (19) of said upper front portion (13, 14) is formed with a wedge-like cross-sectional profile matching said groove (21) recessed in the wire material of frame members.
